# EUROPÄISCHE PATENTSCHRIFT

(11) **EP 0 576 650 B1**
(45) Veröffentlichungstag und Bekanntmachung des Hinweises auf die Patenterteilung: **28.05.1997**
(21) Anmeldenummer: 93901587.1
(22) Anmeldetag: 15.12.1992
(51) Int. Cl.: G01L 23/22

(54) **EINRICHTUNG ZUR ERKENNUNG DES KLOPFENS EINER BRENNKRAFTMASCHINE**
DEVICE FOR DETECTING KNOCKING IN AN INTERNAL COMBUSTION ENGINE
INSTALLATION DE DETECTION DU COGNEMENT D'UN MOTEUR A COMBUSTION INTERNE

(30) Priorität: 22.01.1992 DE 4201567
(43) Veröffentlichungstag der Anmeldung: 05.01.1994
(73) Patentinhaber: ROBERT BOSCH GMBH, 70442 Stuttgart (DE)
(72) Erfinder: SCHLEUPEN, Richard, D-7121 Grossingersheim (DE); BONITZ, Joerg, D-7130 Muehlacker (DE); HARTMANN, Stephan, D-7141 Schwieberdingen (DE); FOERSTER, Juergen, D-9052 Chemnitz (DE)
(86) Internationale Anmeldenummer: DE9201046
(87) Internationale Veröffentlichungsnummer: WO9315384

(56) Entgegenhaltungen:
- EP-A- 0 423 031
- EP-A- 0 454 486
- US-A- 4 466 406
- US-A- 4 651 698

## Beschreibung

### Stand der Technik

Die Erfindung betrifft eine Einrichtung zur Erkennung des Klopfens einer Brennkraftmaschine nach der Gattung des Hauptanspruchs.

Einrichtungen zur Erkennung klopfender Verbrennungen bei Brennkraftmaschinen weisen üblicherweise Filter auf, denen die Ausgangssignale eines Klopfsensors zugeführt werden und die aus diesen Signalen die für klopfende Verbrennungen typischen Frequenzanteile herausfiltern. Aus diesen Frequenzanteilen wird dann in einer nachfolgenden Vergleichsanordnung Klopfen dann erkannt, wenn die klopftypischen Signalanteile höher sind als die aus dem gesamten Signalspektrum oder dem Signalspektrum ohne klopftypischen Anteile ermittelten Hintergrundsignale.

Eine Vorrichtung bzw. ein Verfahren zur Klopferkennung, das die genannten Methoden umfaßt, ist aus der DE-OS 33 42 466 bekannt. Zur Verbesserung der Zuverlässigkeit der Klopferkennung wird bei der bekannten Vorrichtung bzw. dem bekannten Verfahren das Ausgangssignal des Klopfsensors zusätzlich in einem regelbaren Verstärker vor der Filterung so verstärkt, daß die Signalhöhe unabhängig von der Drehzahl in etwa konstant bleibt. Weiterhin ist vorgesehen, das Filter als Digitalfilter auszubilden, wobei die Übertragungsfunktion des digitalen Filters durch Beeinflussung eines Filterfaktors k drehzahl- oder lastabhängig gewählt werden kann.

Die bekannte Vorrichtung bzw. das bekannte Verfahren hat jedoch den Nachteil, daß eine möglicherweise auftretende Frequenzdrift nicht berücksichtigt wird, wodurch eine zuverlässige Klopferkennung erschwert wird.

Aus der EP-A1-423031 ist eine weitere Einrichtung zur Klopferkennung bekannt, bei der das Ausgangssignal eines Klopfsensors mehreren Bandfiltern zugeführt wird, deren Mittenfrequenz, bzw. Mittenfrequenzen in Abhängigkeit von der Motorgeschwindigkeit verschiebbar ist. Durch diese Vorgehensweise wird sichergestellt, daß die vom Klopfen verursachten Signalbestandteile des Ausgangssignales des Klopfsensors bei hohen und bei niedrigen Geschwindigkeiten zuverlässig von den Hintergrundsignalen abgetrennt werden können. Daß die Verschiebung der Mittenfrequenz der Bandfilter in Abhängigkeit vom Kurbelwellenwinkel erfolgen kann, wird in der genannten Druckschrift nicht vorgeschlagen.Gemäß der EP-A2-454486 werden Kurbelwellenwinkel- zonen verschoben, bis das Frequenzspektrum stimmt.

### Vorteile der Erfindung

Die erfindungsgemäße Einrichtung zur Erkennung des Klopfens einer Brennkraftmaschine mit den Merkmalen des Hauptanspruchs hat demgegenüber den Vorteil, daß durch die steuerbare Mittenfrequenz der Filtermittel eine Anpassung dieser Filtermittel an auftretende Frequenzdriften des Klopfsignales ermöglicht wird. Durch diese Nachführung der Mittenfrequenz läßt sich eine Verbesserung des Signal-/Rausch-Verhältnisses erzielen, das eine besonders vorteilhafte Klopferkennung gewährleistet.

Weitere Vorteile lassen sich erzielen, wenn anstelle eines einzigen Filters eine Anzahl von Filtern parallelgeschaltet werden und jede Mittenfrequenz dieser Filter nachgeführt wird. Besonders durch die Nachführung der Mittenfrequenz der einzelnen Filter in Abhängigkeit von Motorbetriebsparametern, beispielsweise der momentanen Kurbelwinkelposition, der Last bzw. des Brennraumdruckes oder der Drehzahl, ist eine weitere Steigerung der Sicherheit der Klopferkennung möglich. Dabei ist die Nachführung der Mittenfrequenz mittels eines Mikrocomputers, der die Resonanzfrequenz eines Filters steuert, besonders vorteilhaft.

Dadurch daß die Änderung der Frequenz und /oder Phase des aufbereiteten Ausgangssignales des Klopfsensors laufend ermittelt wird und zur Klopferkennung die Änderung der Frequenz ausgewertet wird, läßt sich in vorteilhafter Weise der Störabstand gegenüber Hintergrundgeräuschen erhöhen.

Durch die in den Unteransprüchen aufgeführten Maßnahmen sind vorteilhafte Erweiterungen und Verbesserungen der erfindungsgemäßen Einrichtung möglich.

### Zeichnung

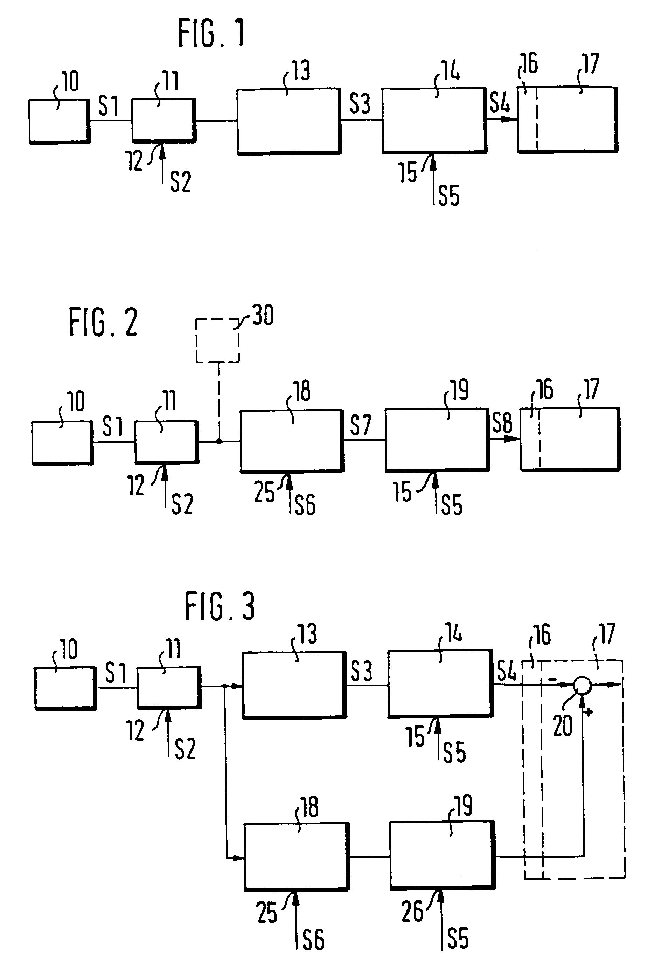

In Figur 1 ist eine Einrichtung zur Klopferkennung dargestellt, wie sie beispielsweise aus der DE-OS 33 42 466 bekannt ist. Die Figuren 2 bis 4 zeigen drei Ausführungsbeispiele der Erfindung.

### Beschreibung

Bei der bekannten Einrichtung zur Klopferkennung nach Figur 1 ist ein Klopfsensor 10, beispielsweise ein Körperschallsensor, der die Ausgangssignale S1 liefert, über einen Verstärker 11, ein Filter 13 und einen Gleichrichter und Integrator 14 mit dem Analog-/Digital-Wandler 16 einer Recheneinrichtung 17, beispielsweise eines Mikrocomputers verbunden.

Die Verstärkung des Verstärkers 11 kann gesteuert oder geregelt werden, dabei werden über einen Eingang 12 entsprechende Signale S2, die beispielsweise von der Recheneinrichtung 17 geliefert werden, zugeführt.

Das Filter 13 weist eine feste Mittenfrequenz fm auf, die so festgelegt ist, daß die vom Klopfen verursachten Signalanteile durchgelassen werden, während die Signalanteile mit anderen Frequenzen ausgefiltert werden.

Der Gleichrichter und Integrator 14 verwertet das vom Filter 13 gelieferte Signal S3 nur während eines Meßfensters und bildet daraus eine Spannung S4, die in der Recheneinrichtung 17 nach einer A/D-Wandlung zur Klopferkennung mit einem Hintergrundsignal verglichen wird, wobei Klopfen dann erkannt wird, wenn der Vergleich eine vorgebbare Bedingung erfüllt.

Signale S5, die die Dauer des Meßfensters sowie seine Lage in Bezug auf die Stellung der Kurbelwelle festlegen, werden über den Eingang 15 zugeführt, diese Signale S5 werden in der Recheneinrichtung 17 kurbelwellenstellungsabhängig gebildet.

Es hat sich gezeigt, daß sich die Frequenz der vom Klopfen herrührenden Signale in Abhängigkeit von bestimmten Parametern der Brennkraftmaschine verschiebt. So nimmt beispielsweise die Frequenz des nach dem oberen Totpunkt oT auftretenden Klopfsignales mit zunehmendem Kurbelwellenwinkel ab. Bei Aufzeichnungen der Körperschallsiqnale eines Klopfsensors wurde dabei eine mit der Kolbenbewegung korrelierte Frequenzdrift beobachtet. Diese Tatsache wird durch die erfindungsgemäßen Einrichtungen ausgenutzt.

Durch die Nachführung der Mittenfrequenz eines Selektionsfilters entsprechend der Frequenzdrift (Chirp) läßt sich eine deutliche Verbesserung des Signal-/Rausch-Verhältnisses erzielen. Das Filter ist dabei so ausgelegt, daß es die für Klopfen charakteristischen Signale durchläßt.

In Figur 2 ist ein erstes Ausführungsbeispiel der Erfindung dargestellt, das dieselben Elemente 10 bis 17 wie die bekannte Einrichtung zur Klopferkennung nach Figur 1 aufweist, die auch in der im Zusammenhang mit Figur 1 beschriebenen Weise funktionieren und Signale liefern bzw. mit Signalen zusammenwirken, die teilweise die in Figur 1 angegebenen Bezeichnungen tragen. Anstelle des Filters 13 weist das erste Ausführungsbeispiel der Erfindung ein Filter 18 mit veränderbarer Mittenfrequenz fml auf, dem über einen Eingang 25 Steuersignale S6 zugeführt werden und das Signale S7 an den mit 19 bezeichneten Gleichrichter und Integrator abgibt.

Die Steuersignale S6 steuern die Mittenfrequenz fml des Filters 18 in einem vorgebbaren Bereich, sie werden in der Recheneinrichtung 17 erzeugt und sollen die Mittenfrequenz fml des Filters 18 so verschieben, daß sie in allen Arbeitsbereichen der Brennkraftmaschine so liegt, daß eine optimale Klopferkennung möglich ist bzw. das Signal-/Rauschverhältnis maximal ist.

Die Steuerung bzw. Verschiebung der Mittenfrequenz fm1 wird mit Hilfe der Recheneinrichtung 17, die beispielsweise ein µC ist, über die Taktfrequenz eines Switched-Capacitor-Filters, das als spulenloses integrierbares Filter aufbaubar ist, durchgeführt. Dabei ist diese Steuerung so durchgeführt, daß die Mittenfrequenz fm1 eine Funktion der momentanen Kurbelwinkelposition ist.

Zur Klopferkennung wird beim Ausführungsbeispiel nach Figur 2 das der Recheneinrichtung 17, der weitere Informationen über den Motorzustand zugeführt werden, vom Gleichrichter und Integrator 19 erzeugte Signal S8 zugeführt und dort mit einem Hintergrundsignal verglichen, bei Überschreiten des Hintergrundsignales wird auf Klopfen erkannt und die Recheneinrichtung 17 leitet geeignete Maßnahmen, beispielsweise Änderung des Zündwinkels ein, um das Klopfen zu beseitigen.

Da die Mittenfrequenz fml des Filters 18 von der Recheneinrichtung 17 unter Berücksichtigung der herrschenden Betriebsbedingungen gesteuert wird, wird sichergestellt, daß die vom Klopfen verursachten und für die Klopferkennung relevanten Signalanteile des geeignet verstärkten Ausgangssignals S1 des Klopfsensors 10 im Filter 18 besonders deutlich von den übrigen Signalanteilen getrennt werden.

In Figur 3 ist ein weiteres Ausführungsbeispiel der Erfindung dargestellt, das eine Kombination der bereits in Figur 1 und 2 angegebenen Elementen umfaßt, wobei das Filter 13 mit der konstanten Mittenfrequenz und der nachfolgende gesteuerten Gleichrichter und Integrator 19 parallel zum Filter 18 mit gesteuerter Mittenfrequenz und dem nachfolgende gesteuerten Gleichrichter und Integrator 19 liegen.

Beim Ausführungsbeispiel nach Figur 3 wird das vom Klopfsensor 10 gelieferte und im Verstärker 11 in geeigneter Weise verstärkte Signal einerseits über das Filter 18 mit steuerbarer Mittenfrequenz fl sowie anschließendem Gleichrichter und Integrator 19 der Recheneinrichtung 17 zugeführt und andererseits über das Filter 13 mit konstanter Mittenfrequenz fm sowie den Gleichrichter und Integrator 14 ebenfalls der Recheneinrichtung 17 zugeführt.

In der Recheneinrichtung 17 wird in dem als Summationspunkt dargestellten Punkt 20 die Differenz der unterschiedlich gefilterten Ausgangssignale des Klopfsensors gebildet. Liegt diese Differenz D über einem vorgebbaren Schwellwert, wird Klopfen erkannt und angezeigt bzw. es werden von der Recheneinrichtung 17 Maßnahmen zur Behebung des Klopfens eingeleitet.

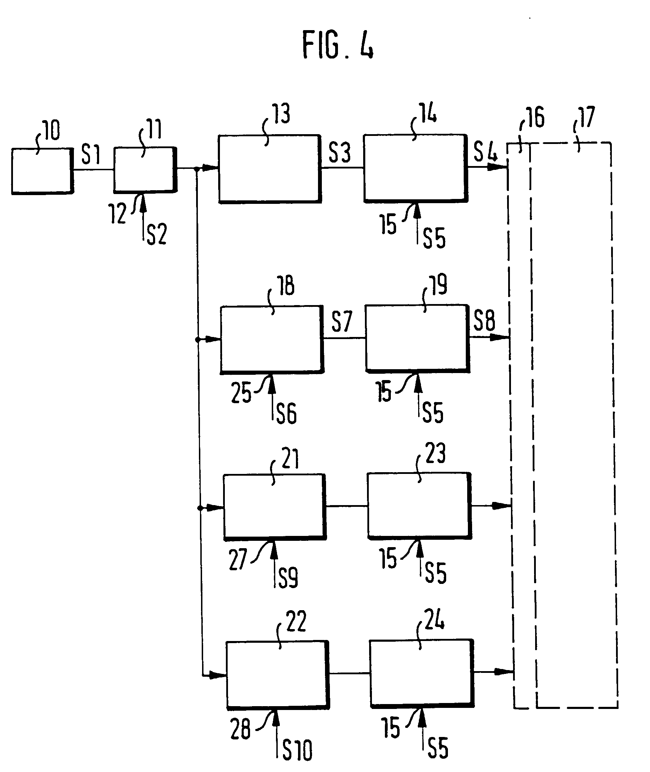

Beim Ausführungsbeispiel nach Figur 4 sind mehrere Filter 13, 18, 21, 22 vorgesehen, die zueinander parallel liegen. Das Filter 13 weist eine konstante Mittenfrequenz fm auf, während die Filter 18, 21 und 22 gesteuerte Mittenfrequenzen fm1, fm2, fm3 aufweisen, die alle innerhalb eines vorgebbaren Bereiches veränderbar sind.

Die Ansteuerung der Filter 18, 21, 22 oder gegebenenfalls weiterer Filter, wird von der Recheneinrichtung 17 ausgelöst und erfolgt wiederum durch Einkopplung von Steuersignalen S6, S9, S10 über entsprechende Eingänge 25, 27, 28 so daß die Frequenzverschiebungen falls erforderlich unabhängig voneinander erfolgen können.

Die Filter 13, 18, 21 und 22 sind über Gleichrichter und Integratoren 19, 23, 24 und 25 mit der Recheneinrichtung 17 verbunden, wobei jeweils noch eine Analog-/Digitalwandler, allgemein mit 16 bezeichnet dazwischenliegt. Der Eingang, über den den Gleichrichtern und Integratoren 19, 23, 24 und 25 die mit S5 bezeichneten Steuersignale zugeführt werden, sind allgemein mit 15 bezeichnet.

Bei der Einrichtung nach Figur 4 werden die variablen Mittenfrequenzen der Filter 18, 21 und 22 den unterschiedlichen Schwingungsmodi f1, f2 ... fn im Brennraum angepaßt, so daß die Mittenfrequenzen fm1, fm2, ... fmn diesen Frequenzen entsprechen. Die Schwingungsmodi f1, f2 ... fn stellen dabei die Harmonischen einer Grundschwingung f dar, die durch Klopfen der Brennkraftmaschine verursacht wird.

Die Anpassung der Mittenfrequenzen wird von der Recheneinrichtung 17 gesteuert, beispielsweise über die Taktfrequenz eines Switched-Capacitor-Filters.

Die Bewertung der einzelnen Signale, die über die Filter und Gleichrichter und Integratoren zur Recheneinrichtung 17 gelangen, wird in dieser Recheneinrichtung vorgenommen; Klopfen wird dann erkannt, wenn für einen oder mehrere Zweige mit den Mittenfrequenzen fm die Erkennungskriterien nach Figur 2 oder 3 erfüllt sind.

Die Bildung der Meßfenster, während derer die Gleichrichter und Integratoren 14, 19, 23 und 24 jeweils arbeiten, wird von der Recheneinrichtung 17 in Abhängigkeit vom Kurbelwellenwinkel bzw. der Drehzahl oder Last festgelegt.

Zur Frequenzanalyse können die in den Figuren 2 bis 4 dargestellten Einrichtungen zusätzliche Frequenz- bzw. Phasendetektoren aufweisen, die die Frequenz und Phase der Sensorausgangssignale bestimmen. Dazu wird beispielsweise das im Verstärker 11 aufbereitete Sensorausgangssignal ausgekoppelt und dem Frequenz- bzw. Phasendetektor 30 zugeführt.

## Patentansprüche

1. Einrichtung zur Erkennung des Klopfens einer Brennkraftmaschine, mit einem Klopfsensor (10), der über Filtermittel (13, 18, 21, 22) mit einer Auswerteeinrichtung in Verbindung steht, wobei die Mittenfrequenz (fm1, ...fmn) wenigstens eines Filtermittels (13, 18, 21, 22) abhängig von wenigstens einem Betriebsparameter der Brennkraftmaschine steuerbar ist, dadurch gekennzeichnet, daß dieser Betriebsparameter der Kurbelwellenwinkel ist und die Einrichtung so ausgebildet ist, daß die Mittenfrequenz (fm1, ...fmn) so gesteuert wird, daß die mit zunehmendem Kurbelwellenwinkel auftretende Frequenzänderung des nach dem oberen Totpunkt (OT) auftretenden Klopfsignales berücksichtigt wird.

2. Einrichtung nach Anspruch 1, dadurch gekennzeichnet, daß die Steuerung der Mittenfrequenz zusätzlich in Abhängigkeit von der Drehzahl oder der Last oder des Brennraumdruckes oder einen beliebigen Kombination der genannten Größen beeinflußt wird.

3. Einrichtung nach Anspruch 1 oder 2, dadurch gekennzeichnet, daß die Filtermittel (n) parallel gespeiste Filter (13, 18, 21, 22) umfassen, deren Mittenfrequenzen (fm1, ...fmn) steuerbar sind.

4. Einrichtung nach einem der vorhergehenden Ansprüche, dadurch gekennzeichnet, daß die Auswerteeinrichtung eine Recheneinrichtung (17) umfaßt.

5. Einrichtung nach einem der vorhergehenden Ansprüche, dadurch gekennzeichnet, daß die Mittenfrequenz oder -frequenzen von der Recheneinrichtung (17) steuerbar sind.

6. Einrichtung nach einem der vorhergehenden Ansprüche, dadurch gekennzeichnet, daß die Steuerung über die Taktfrequenz eines Switched-Capacitor-Filters erfolgt.

7. Einrichtung nach einem der Ansprüche 4 bis 6, dadurch gekennzeichnet, daß die Recheneinrichtung (17) so ausgebildet ist, daß die Differenz von unterschiedlich gefilterten Ausgangssignalen des Klopfsensors (10) gebildet wird, wobei Klopfen dann erkannt wird, wenn diese Differenz D über einem vorgebbaren Schwellwert liegt.

8. Einrichtung nach Anspruch 7, dadurch gekennzeichnet, daß die unterschiedlich gefilterten Ausgangssignale über Gleichrichter und Integratoren (14, 19) der Recheneinrichtung (17) zuführbar sind.

## Claims

1. Device for detecting knocking in an internal combustion engine, having a knock sensor (10) which is connected to an evaluation device via filter means (13, 18, 21, 22), it being possible to control the centre frequency (fm1, ...fmn) of at least one filter means (13, 18, 21, 22) as a function of at least one operating parameter of the internal combustion engine, characterized in that this operating parameter is the crank shaft angle and the device is constructed in such a way that the centre frequency (fm1, ...fmn) is controlled in such a way that the frequency change, occurring with the increasing crank shaft angle, of the knock signal occurring after the upper dead centre (OT) is taken into account.

2. Device according to Claim 1, characterized in that the control of the centre frequency is additionally influenced as a function of the rotational speed or the load or the combustion space pressure or any desired combination of the said variables.

3. Device according to Claim 1 or 2, characterized in that the filter means (n) comprise filters (13, 18, 21, 22) which are fed in parallel and whose centre frequencies (fm1, ...fmn) can be controlled.

4. Device according to one of the preceding claims, characterized in that the evaluation device comprises an arithmetic unit (17).

5. Device according to one of the preceding claims, characterized in that the centre frequency or frequencies can be controlled by the arithmetic unit (17).

6. Device according to one of the preceding claims, characterized in that the control is effected via the clock frequency of a switched capacitor filter.

7. Device according to one of Claims 4 to 6, characterized in that the arithmetic unit (17) is constructed in such a way that the difference between output signals of the knock sensor (10) which have been filtered differently is formed, knocking being detected if this difference D is above a prescribable threshold value.

8. Device according to Claim 7, characterized in that the output signals which have been filtered differently can be fed to the arithmetic unit (17) via rectifiers and integrators (14, 19).

## Revendications

1. Installation de détection du cliquetis d'un moteur à combustion interne comportant un détecteur de cliquetis (10) relié par un élément de filtre (13, 18, 21, 22) à une installation d'exploitation, la fréquence centrale (fm1 ...fmn) d'au moins un élément de filtre (13, 18, 21, 22) étant commandée selon au moins un paramètre de fonctionnement du moteur à combustion interne,
caractérisée en ce que
ce paramètre de fonctionnement est l'angle du vilebrequin et l'installation est réalisée pour que la fréquence centrale (fm1...fmn) soit commandée pour prendre en compte la variation de fréquence provoquée par l'augmentation de l'angle du vilebrequin du signal de cliquetis produit après le point mort haut (OT).

2. Installation selon la revendication 1,
caractérisée en ce que
la commande de la fréquence centrale est en outre influencée en fonction de la vitesse de rotation de la charge ou de la pression dans la chambre de combustion ou d'une combinaison quelconque de ses grandeurs.

3. Installation selon la revendication 1 ou 2,
caractérisée en ce que
les moyens de filtre comprennent (n) filtre alimenté en parallèle (13, 18, 21, 22) dont les fréquences centrales (fm1...fmn) sont commandées.

4. Installation selon l'une des revendications précédentes,
caractérisée en ce que
l'installation d'exploitation comprend une installation de calcul (17).

5. Installation selon l'une des revendications précédentes,
caractérisée en ce que
la ou les fréquences centrales sont commandées par l'installation de calcul.

6. Installation selon l'une des revendications précédentes,
caractérisée en ce que
la commande se fait à partir de la fréquence d'horloge d'un filtre à condensateur commuté.

7. Installation selon l'une des revendications 4 à 6,
caractérisée en ce que
l'installation de calcul (17) est réalisée pour former la différence de signaux de sortie filtrés différemment du capteur de cliquetis (10) et on considère qu'il y a cliquetis si cette différence (D) dépasse un seuil prédéterminé.

8. Installation selon la revendication 7,
caractérisée en ce que
les signaux de sortie filtrés différemment sont appliqués par des redresseurs intégrateurs (14, 19) à l'installation de calcul (17).
